# EUROPEAN PATENT APPLICATION

(11) **EP 2 260 930 A1**
(43) Date of publication of application: **15.12.2010**
(21) Application number: 08720636.3
(22) Date of filing: 27.03.2008
(51) Int. Cl.: B01D 63/08, B01D 63/00

(54) **MEMBRANE ELEMENT AND MEMBRANE MODULE**

(71) Applicant: Kubota Corporation, Osaka-shi Osaka 556-8601 (JP)
(72) Inventor: Hidetoshi MASUTANI, Hyogo 661-8567 (JP); Yasunobu OKAJIMA, Hyogo 661-8567 (JP); Tomokazu KITANO, Hyogo 661-8567 (JP)
(74) Representative: le Vrang, Klaus
(86) International application number: PCT/JP2008/000757
(87) International publication number: WO 2009/118789

(57) **Abstract**

By forming a filtration membrane in a loop shape, it is possible to apply a high internal pressure and perform reverse liquid cleaning at a high internal pressure in chemical cleaning. A membrane element and a membrane module in which breakage and peeling arse unlikely to occur on a filtration membrane even if aeration is performed in a state in which a filtration operation is stopped or even if a high internal pressure is applied in chemical cleaning.

## Description

### Technical Field

The present invention relates to a membrane element and a membrane module used for filtration or concentration in the water treatment of tap water, wastewater, and the like.

### Background Art

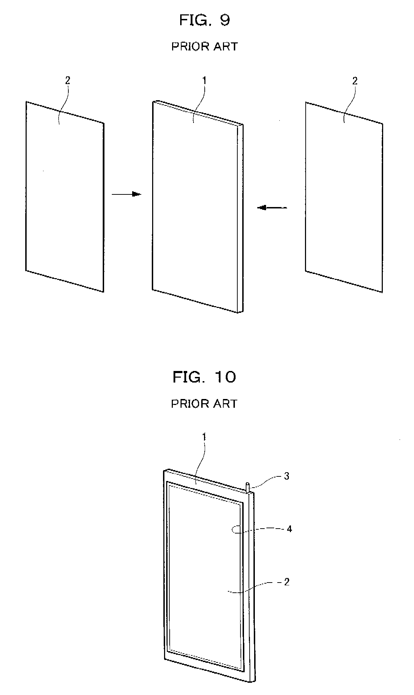

As a conventional membrane separator, for example, a submerged membrane filtration apparatus having a plurality of membrane elements arranged in parallel at appropriate intervals is known. As the membrane element, for example, there is a membrane element shown in FIGS. 9 and 10. In FIGS. 9 and 10, in the membrane element, filtration membranes 2 formed of an organic membrane are arranged to cover the surfaces of a rectangular flat filtration plate 1, which is a membrane supporting member, and the filtration membranes 2 are jointed to the filtration plate 1 in the peripheral edges of the filtration membranes 2. The filtration plate 1 has a water collecting port 3. As the membrane supporting member, the filtration plate 1 of resin is described as an example. However, in some case, a membrane supporting member made of a flexible material such as a non-woven fabric or a net may be used.

The membrane element receives a driving pressure and filters water to be treated with the filtration membrane 2. The membrane element is used for gravity filtration using a head pressure in a tank as the driving pressure or suction filtration giving a negative pressure as the driving pressure to the inner side of the filtration membrane 2.

As a method of joining the filtration plate 1 and the filtration membrane 2 in such a membrane element, for example, welding and bonding are performed. The welding is a method of melting the resin of the filtration plate 1 using ultrasound to form a welded portion 4 and joining the filtration plate 1 and the filtration membranes 2 in the welded portion 4.

As the method of joining the filtration plate 1 and filtration membranes 2, for example, there is a method described in Japanese Patent No. 3010979. In the method, a filtration membrane is arranged on the surface of a filtration plate, ultrasonic vibrations from above the filtration membrane are applied along the peripheral edge of the filtration membrane, and the filtration membrane is welded to the filtration plate with the frictional heat of ultrasonic vibrations.

According to a method described in Japanese Patent Application Laid-Open No. Hll-33370, two flat membranes are stacked via a spacer and the two flat membranes are welded or bonded end to end on both sides of the flat membranes to form a filtration membrane body.

According to a method described in Japanese Patent No. 3815645, a separator unit is obtained by attaching filtration membranes via spacers on both surfaces of a member having a water passing unction and forming a hollow portion in a joining member for joining membrane ends.

### Disclosure of the Invention

### Problems to be Solved by the Invention

When the above-described membrane separator is used, the membrane separator is immersed in an activated sludge mixture in an aeration tank, and air for aeration is diffused from an air diffuser. In this state, a driving pressure is applied to the membrane element to filter the activated sludge mixture and permeate having permeated through the filtration membrane is led to the outside of the tank as treated water.

At this point, upflow is caused by the air-lift action of air bubbles of the air for aeration diffused from the air diffuser. The membrane surface of filtration membrane of the membrane element is aerated and cleaned by this upflow. Thus a decrease in separating function due to fouling is suppressed and the membrane separator is prevented from being nonfunctional.

In this way, in the membrane separator, the process of aerating and cleaning is necessary to prevent fouling. In this case, it has been known that a cleaning effect is improved if aeration is performed in a state in which a filtration operation is stopped.

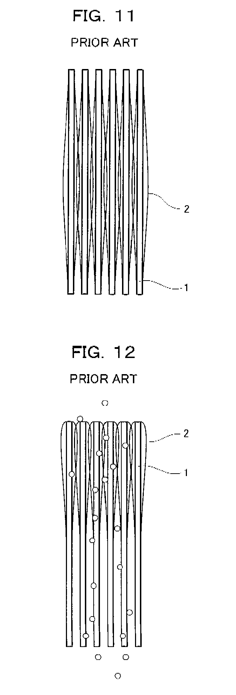

However, as shown in FIG. 11, if the membrane separator is left in the state in which the filtration operation is stopped, permeate accumulates in the inside of the membrane element, i.e., between the filtration plate 1 and the filtration membranes 2, and the filtration membranes 2 slightly swell.

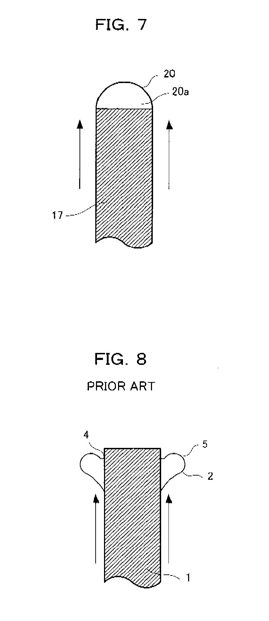

As shown in FIG. 12, when only the aeration is performed in the state in which the filtration operation is stopped, the permeate having accumulated between the filtration plate 1 and the filtration membranes 2 is pushed upward by upflow. As a result, as shown in FIG. 8, the filtration membrane 2 is folded in the welded portion 4 to form a swell 5 near the upper part of the membrane element. This swell 5 acts as a resistance against the upflow, and vibrations and stresses occur on the filtration membrane 2. Therefore, the filtration membrane 2 is likely to peel off in the welded portion 4 or be broken near the welded portion 4.

when fouling occurs, chemical cleaning for removing the fouling becomes necessary. This chemical cleaning is performed by supplying a chemical from the water collecting port 3 to a permeate channel between the filtration plate 1 and the filtration membranes 2. When an internal pressure in the permeate channel between the filtration plate 1 and the filtration membranes 2 increases with the supply pressure of the chemical, the filtration, membranes 3 swell outward and exert a peeling action on the joined portions of the filtration plate 1 and the filtration membranes 2.

Therefore, as explained above, since a tensile force acts in a direction in which the filtration membrane 2 is peeled from the joined surface with the filtration plate 1, disadvantageously, breakage and peeling are likely to occur on the filtration membrane 2 in the welded portion 4 and a high internal pressure cannot be applied in the chemical cleaning.

The present invention solves the problems and it is an object of the present invention to provide a membrane element and a membrane module in which breakage and peeling are unlikely to occur on a filtration membrane even if aeration is performed in a state in which a filtration operation is stopped or even if a high internal pressure is applied in chemical cleaning.

### Means for Solving the Problems

In order to attain the object, a membrane element according to the present invention includes: a membrane supporting member arranged along the flowing direction of a liquid to be treated; a filtration membrane formed of a flat membrane that is arranged to cover the principal planes on the front and back of the membrane supporting member and is loop-shaped to have a reversed portion folded so as to include the ends on the upstream side and the downstream side of the membrane supporting member; and a sealing material formed water-tightly on the edge side portion of the filtration membrane on both sides of the membrane supporting member along the flowing direction of the liquid to be treated.

In the membrane element of the present invention, the filtration membrane has at least one joined portion. The joined portion is formed by arranging the ends of the filtration membrane to be stacked on top of each other on the principal planes or the end faces of the membrane supporting member and joining the surface at one end onto the surface at the other end of the filtration membrane.

In the membrane element of the present invention, the end facing the downstream side, out of the ends of the filtration membranes stacked in the joined portion is arranged on the outer side.

A membrane module of the present invention includes: at least one membrane element; and at least one water collecting case. The membrane element includes: a membrane supporting member arranged along the flowing direction of a liquid to be treated; a filtration membrane formed of a flat membrane that is arranged to cover the principal planes on the front and back of the membrane supporting member and is loop-shaped to have a reversed portion folded so as to include the ends on the upstream sidle and the downstream side of the membrane supporting member; and a sealing material formed water-tightly on the edge side portion of the filtration membrane on both sides of the membrane supporting member along the flowing direction of the liquid to be treated. The water collecting case has an opening portion communicating with an inner water collecting space therein and keeps water-tight the sides of the membrane element inserted in the opening portion.

### Advantages of the Invention

As explained above, in the present invention, opening edges on both sides of the loop-shaped filtration membrane are held on the membrane supporting member by forming the sealing material water-tightly on the edge side portion of the filtration membrane on both sides of the membrane supporting member along the flowing direction of the liquid to be treated. Therefore, there is no region where the filtration membrane and the membrane supporting member are directly fixed. The sealing material does not always need to strongly press the filtration membrane against the filtration plate. However, in the membrane element, the filtration plate and the filtration membrane can also be directly joined in an area where the membrane surface of the filtration membrane does not come into contact with the liquid to be treated, for example, an area corresponding to the sealing material or an area located in the water collecting case. This is on the condition that the joining does not hinder a permeate channel.

The filtration membrane may be formed in a loop shape by joining the ends of one or a plurality of membrane sheets. The filtration membrane can also be formed of a membrane sheet that is seamless and formed in a loop shape.

With this configuration, when a chemical is supplied at a predetermined pressure to the permeate channel between the membrane supporting member and the filtration membrane in chemical, cleaning, the filtration membrane receives an internal pressure and swells to the outer side- In this state, a tensile stress acts along the membrane surface of the filtration membrane. However, since there is no region where the filtration membrane and the membrane supporting member are directly fixed, compared with the case in which the membrane supporting member and the filtration membrane are welded as in the prior art, it is possible to suppress breakage of the filtration membrane and apply a high internal pressure in chemical cleaning.

On both sides of the membrane element along the flowing direction of the liquid to be treated, the sealing material is water-tightly formed on the filtration membrane. Therefore, even if the filtration membrane receives an internal pressure and swells to the outer side, the filtration membrane can secure a large strength.

When air is diffused from below the membrane element in a state in which a filtration operation is stopped, permeate present between the membrane supporting member and the filtration membrane is pushed to the downstream side of the flow of the liquid to be treated and is collected in the reversed portion. The filtration membrane flexibly swells in the reversed portion to allow the permeate to move. Further, since the swell of the reversed portion occurs in the downstream area of the end on the downstream side of the membrane supporting member, the swell of the reversed portion does not serve as a resistance against the flow of the liquid to be treated along the membrane supporting member. Vibrations and stresses do not occur in the filtration membrane because of the swell of the reversed portion. Therefore, it is possible to suppress a load acting on the filtration membrane and present the filtration membrane from breaking. Since the end arranged on the outer side faces the downstream side and is not opposed to the flow of the liquid to be treated, it is possible to suppress peeling of the joined portion of the filtration membrane.

### Brief Description of the Drawings

FIG. 1 is a perspective view showing a membrane cassette in an embodiment of the present invention;
FIG. 2 is a sectional view showing a main part in a membrane module of the membrane cassette;
FIG. 3 is a perspective view showing a membrane element in the embodiment of the present invention;
FIG. 4 is a front view showing the membrane element;
FIG. 5 is a perspective view showing a membrane element in another embodiment of the present invention;

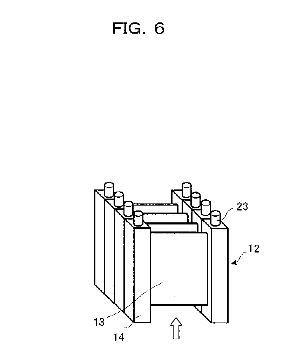

FIG. 6 is a perspective view showing a membrane element in a third embodiment of the present invention;
FIG. 7 is a schematic diagram showing an action of a membrane element of the present invention;
FIG. 8 is a schematic diagram showing an action of a conventional membrane element;
FIG. 9 is a disassembled perspective view showing the configuration of the conventional membrane element;
FIG. 10 is a perspective view showing the conventional membrane element;
FIG. 11 is a side view showing the conventional membrane element; and
FIG. 12 is a side view showing the conventional membrane element.

### Best Mode for Carrying Out the Invention

### (First Embodiment)

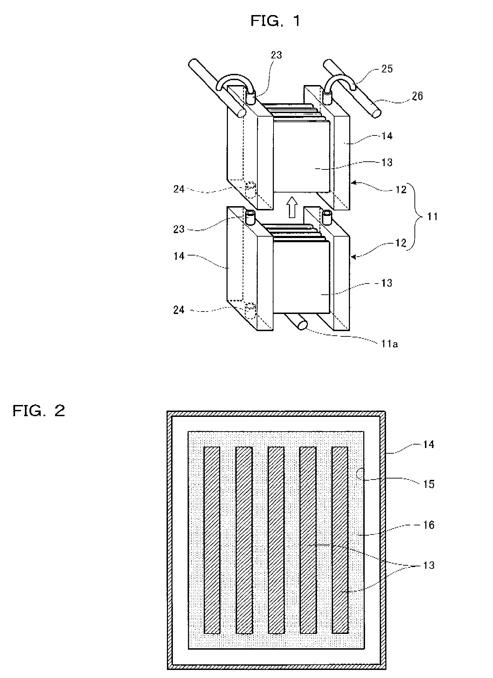

An embodiment of the present invention is explained below with reference to the accompanying drawings. In FIGS. 1 to 4, a membrane cassette 11 forming a membrane separator includes a plurality of membrane modules 12 arranged in a vertically parallel multistage fashion. The membrane cassette 11 is set and immersed in liquid to be treated in a treatment tank (not shown). In the membrane cassette 11, an air diffuser 11a is arranged below the lower membrane module 12.

In the membrane module 12, a plurality of membrane elements 13 are arranged in parallel at predetermined intervals. Both sides in the lateral direction of each of the membrane elements 13 are water-tightly sealed to water collecting cases 14, Longitudinal channels are formed between the membrane element 13. Each of the water collecting cases 14 is hollow-shaped and has a water collecting space therein. Although the water collecting case 14 is formed like a square box, the water collecting case 14 may be in a shape other than a square. However, the water collecting case 14 can also be provided only on one side of the membrane element 13. In this case, the other side of the membrane element 13 is sealed by resin or the like explained later.

In this embodiment, a configuration in which the membrane elements 13 are arranged in the up-to-down direction is explained. However, the arranging direction of the membrane elements 13 is not limited to the up-to-down direction. The membrane elements 13 only have to be arranged along the flowing direction of the liquid to be treated. Therefore, as explained later, it is also possible to arrange the membrane elements 13 in the horizontal direction or obliquely.

The membrane module 12 includes upper coupling portions 23 provided on the upper end faces of the water collecting cases 14 and lower coupling portions 24 provided on the lower end faces thereof. The upper coupling portions 23 and the lower coupling portions 24 form channels and communicate with the water collecting spaces of the water collecting cases 14.

The lower coupling portions 24 of the upper membrane module 12 and the upper coupling portions 23 of the lower membrane module 12 are coupled. The upper coupling portions 23 of the water collecting cases 14 of the upper membrane module 12 communicate with water collecting pipes 26 via tubes 25.

However, the lower coupling portions 24 of the lower membrane module 12 can also communicate with the water collecting pipes 26 via the tubes 25. Further, the lower coupling portions 24 or the upper coupling portions 23 can also communicate with the water collecting pipes 26 not via the tubes 25 but directly.

In this embodiment, the lower coupling portions 24 of the lower membrane module 12 are closed by plugs (not shown). However, it is also possible to use a membrane module having no lower coupling portions 24 as the lower membrane module 12.

Extraction of permeate only has to be performed from at least one of the left and right upper coupling portions 23 of the upper membrane module 12 and the left and right lower coupling portions 24 of the lower membrane module 12.

As shown in FIG. 2, the plurality of membrane elements 13 are water-tightly held by each of the water collecting cases 14 via a sealing material (resin, etc.) 16 potted in an opening portion 15. However, the water collecting case 14 is not limited to the configuration shown in FIG. 2. There are various structures for water-tightly joining the membrane elements 13 to the water collecting case 14. For example, it is also possible to form a plurality of slits instead of the single opening portion 15 of the water collecting case 14, insert the membrane elements 13 into the slits, and pot the sealing material 16 of resin or the like in the slits. Alternatively, it is also possible to arrange a seal material such as rubber around the membrane elements 13.

### (Configuration of the membrane element)

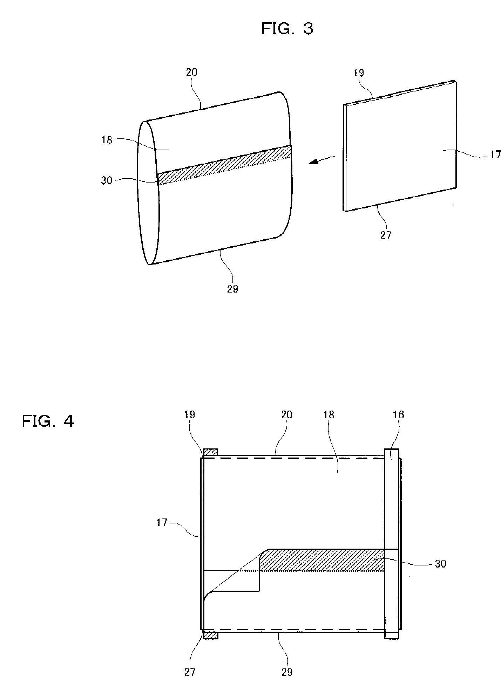

As shown in FIGS. 3 and 4, the membrane element 13 includes a filtration plate 17 made of resin, which forms a membrane supporting member, and a filtration membrane 18 made of a flat sheet membrane (an organic membrane) arranged to cover the surfaces on the front and back of the filtration plate 17. In each of the membrane elements 13, permeate channels formed between the surfaces on the front and back of the filtration plate 17 and the filtration membrane 18 communicate with the water collecting spaces of the water collecting cases 14. In this embodiment, the filtration plate 17 made of resin is explained as an example of the membrane supporting member. However, in some case, a membrane supporting member of a flexible material such as non-woven fabric or a net is used.

The upper end side of the membrane element 13 is located on the downstream side in the flowing direction of the liquid to be treated. The lower end side of the membrane element 13 is locate on the upstream side in the flowing direction of the liquid to be treated. The filtration membrane 18 includes a downstream side reversed portion 20 folded to include an end 19 on the downstream side of the filtration plate 17 and an upstream side reversed portion 29 folded to include an end 27 on the upstream side thereof. The ends of the filtration membrane 18 overlap each other on the surfaces or end faces of the filtration plate 17. The back surface at one end is joined onto the front surface at the other end and the one end facing towards the downstream side is located on the outer side to form a joined portion 30. The joined portion 30 is formed by welding with ultrasound or bonding with an adhesive.

The membrane elements 13 having this structure are arranged in parallel at predetermined intervals. The plurality of membrane elements 13 are water-tightly sealed into the opening portion 15 of the water collecting case 14 by the sealing material (resin, etc.) 16 arranged between the membrane elements 13.

In this configuration, the membrane element 13 has a structure in which the filtration plate 17 and the filtration membrane 18 are not directly fixed and joined. A structure in which the filtration membrane 18 and the filtration plate 17 are not directly fixed by bonding or welding on four sides of the filtration plate 17 is realized.

However, in the membrane element 13, the filtration plate 17 and the filtration membrane 18 can also be directly jointed in an area where the membrane surface of the filtration membrane 18 does not come into contact with the liquid to be treated, for example, an area corresponding to the sealing material 16 or an area located inside the water collecting case 14. This is on condition that the joining does not hinder the permeate channel.

As shown in FIG. 4, the sealing material 16 can be formed for each of the membrane elements 13. The edge side portion of the filtration membrane 18 is held by the sealing material 16 for each of the membrane elements 13 on both sides of the filtration plate 17 along the flowing direction of the liquid to be treated. Thereafter, it is possible to arrange the membrane elements 13 having this structure in parallel at predetermined intervals and bind the plurality of membrane elements 13 with the sealing material (resin, etc.) 16 arranged between the membrane elements 13. Further, as explained above, it is also possible to arrange a seal material such as a rubber material on the filtration membrane 18 and join the filtration membrane 18 to the filtration plate 17.

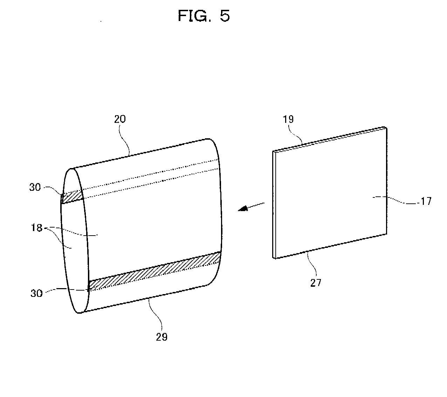

In the embodiment, the loop-shaped filtration membrane 18 is formed by one membrane sheet. However, as shown in FIG. 5, it is also possible to form the loop-shaped filtration membrane 18 with a plurality of membrane sheets.

In FIG. 5, one out of two membrane sheets forking the filtration membrane 18 forms the downstream side reversed portion 20 folded to include the upper end edge 19 of the filtration pilate 17. The other membrane sheet forms the upstream side reversed portion 29 folded to include the end 27 on the upstream side. The ends of both membrane sheets are stacked on top of each other on the surfaces of the filtration plate 17 and the ends of both membrane sheets are joined to form two joined portions 30. The joined portions 30 are formed by welding with ultrasound or bonding with an adhesive.

Further, the filtration membrane 18 can also be formed of a seamless loop-shaped membrane sheet.

Regardless of which of the membrane elements 13 is used, the following operations and effects are realized in the membrane module 12 of the present invention.

### Normal operation

Air is diffused as a gas for aeration from the air diffuser 11a arranged below the lower membrane module 12. Upflow of air-liquid mixtures is caused inside the membrane cassette 11 by the air-lift action of air bubbles. The liquid to be treated in a treatment tank (not shown) is supplied between the membrane elements 13 by this upflow. A flow of the liquid to be treated along the membrane surfaces of the membrane elements 13 is formed. The liquid to be treated is supplied as a cross flow with respect to the flow of permeate flowing to permeate through the filtration membrane 18.

In this embodiment, the liquid to be treated is supplied as the cross flow by the upflow caused by the air-lift action. Therefore, the membrane elements 13 are arranged in the up-to-down direction. However, when the liquid to be treated is supplied as the cross flow between the membrane elements 13 by a power unit such as a pump, the membrane elements 13 can also be arranged in the horizontal or oblique direction.

There are various systems for applying a driving pressure to the membrane elements 13. In this embodiment, an activated sludge mixture in the tank is gravity-filtrated by the membrane elements 13 with a water head in the tank as a driving pressure. Alternatively, a suction pressure is applied to the membrane module 12 of the membrane cassette 11 as a driving pressure through the water collecting pipes 26 and the tubes 25 by a suction pump to suck and filter the activated sludge mixture.

The permeate having received the driving pressure and permeated through the filtration membranes 18 of the membrane elements 13 flows into the water collecting spaces of the water collecting cases 14 through the permeate channels between the filtration membranes 18 and the filtration plates 17. The permeate having flowed into the water collecting cases 14 of the lower membrane module 12 flows into the water collecting cases 14 of the upper membrane module 12 from the lower coupling portions 24 through the upper coupling portions 23. The permeate having flowed into the water collecting cases 14 of the upper membrane module 12 is led out to the outside of the tank as treated water from the upper coupling portions 23 through the tubes 25 and the water collecting pipes 26.

During this operation, the activated sludge mixture is supplied as a cross flow to the channels between the membrane elements 13 by upflow. The membrane surfaces of the membrane elements 13 are aerated and cleaned by the upflow. Thus a decrease in separating function due to fouling is suppressed and the membrane separator is prevented from being nonfunctional. In this case, since the ends arranged on the outer side face the downstream side and are not opposed to the flow of the liquid to be treated, peeling of the filtration membrane joined portions can be suppressed.

### Aeration and cleaning operation

In the case of the gravity filtration, valves (not shown) provided in the water collecting pipes 26 are closed. In the case of the suction filtration, the suction pump is stopped to stop the filtration operation. When the air diffuser 11a is operated to perform the aeration and cleaning in this state, an excellent cleaning effect can be obtained.

At this point, the upflow pushes the permeate in each of the membrane elements 13 to the upper downstream side between the filtration plate 17 and the filtration membrane 18. However, as shown in FIG. 7, the filtration membrane 18 includes the reversed portion 20 folded to include the end 19 on the downstream side of the filtration plate 17. Therefore, the permeate pushed to the upper downstream side between the filtration plate 17 and the filtration membrane 18 is collected in the reversed portion 20. The filtration membrane 18 flexibly swells in the reversed portion 20 to allow the permeate to move. Further, since a swell 20a of the reversed portion 20 is formed in the downstream area of the end 19 on the downstream side of the filtration plate 17, the swell 20a of the reversed portion 20 does not act as a resistance against the upflow flowing along the filtration plate 17. Vibrations and stresses do not occur in the filtration membrane 18 because of the swell 20a of the reversed portion 20.

Therefore, a load acting on the filtration membrane 18 is suppressed to prevent the filtration membrane 18 from being broken because the reversed portion 20 flexibly swells to allow the permeate to move and the swell 20a does not act as a resistance against the upflow.

### Chemical cleaning

During chemical cleaning, a chemical is supplied to each of the membrane modules 12 of the membrane cassette 11 through the water collecting pipes 26 and the tubes 25. The chemical is supplied at a predetermined pressure to the permeate channel between the filtration plate 17 and the filtration membrane 18. At this point, the filtration membrane 18 receives an internal pressure and swells to the outer side. In this state, a tensile stress acts on the filtration membrane 18 along the membrane surface.

However, instead of fixing the filtration membrane 18 and the filtration plate 17, when the ends of the filtration membrane 18 are joined in the joined portion 30 to form the loop-shaped filtration membrane 18, naturally, the filtration membrane 18 does not peel from the filtration plate 17 unlike in the prior art. Since only a tensile stress acts on the joined portion 30, the joined portion 30 can sufficiently withstand the tensile stress. It is possible to apply a high internal pressure to the joined portion 30 in chemical cleaning.

Compared with the case in which the filtration plate 17 and the filtration membrane 18 are welded as in the prior art, in this embodiment, the ends of both membrane sheets are stacked on top of each other on the surfaces of the filtration plate 17 and the surface at one end is joined to the surface at the other end to form the joined portion 30. Therefore, since the tensile force acting on the filtration membrane 18 acts as a shearing force in the joined portion 30, a large joining strength can be secured. Further, on both sides along the flowing direction of the liquid to be treated of the membrane element 13. since the sealing material 16 is water-tightly formed on the filtration membrane 18, even if the filtration membrane 18 receives an internal pressure and swells to the outside, a large strength can be secured.

For example, in the conventional configuration, i.e., in the case in which the filtration membrane was welded and joined to the filtration plate, when the internal pressure was equal to or higher than 40 kPa, breakage of a welded portion was observed. However, in the configuration of the present invention, even under a condition in which the internal pressure was 100 kPa, breakage in the joined portion 30 did not occur and the anti-pressure strength was improved.

Therefore, it is possible to perform, while suppressing breakage of the filtration membrane 18 in chemical cleaning, reverse liquid cleaning for feeding a chemical in a short time under a high pressure and causing the chemical to permeate from the inner side to the outer side under a high internal pressure.

## Claims

1. A membrane element comprising: a membrane supporting member arranged along a flowing direction of a liquid to be treated; a filtration membrane formed of a flat sheet membrane that is arranged to cover both front and back surfaces of the membrane supporting member and is loop-shaped to have a reversed portion folded so as to include ends on an upstream side and a downstream side of the membrane supporting member; and a sealing maternal formed water-tightly on an edge side portion of the filtration membrane on both sides of the membrane supporting member along the flowing direction of the liquid to be treated.

2. The membrane element according to claim 1, wherein the filtration membrane includes at least one joined portion, and the joined portion is formed by arranging ends of the filtration membrane to be stacked on top of each other on the surfaces or end faces of the membrane supporting member and joining a back surface at one end onto a front surface at the other end of the filtration membrane.

3. The membrane element according to claim 2, wherein the end facing the downstream side, out of the ends of the filtration membrane stacked in the joined portion is arranged on an outer side.

4. A membrane module comprising: at least one membrane element; and at least one water collecting case, wherein
the membrane element comprises: a membrane supporting member arranged along a flowing direction of a liquid to be treated; a filtration membrane formed of a flat sheet membrane that is arranged to cover both front and back surfaces of the membrane supporting member and is loop-shaped to have a reversed portion folded so as to include ends on an upstream side and a downstream side of the membrane supporting member; and a sealing material formed water-tightly on an edge side portion of the filtration membrane on both sides of the membrane supporting member along the flowing direction of the liquid to be treated, and
the water collecting case includes an opening portion communicating with a water collecting space therein and keeps water-tight sides of the membrane element inserted in the opening portion.
